# EUROPEAN PATENT APPLICATION

(11) **EP 0 955 540 A2**
(43) Date of publication of application: **10.11.1999**
(21) Application number: 99109084.6
(22) Date of filing: 07.05.1999
(51) Int. Cl.: G01N 27/407

(54) **Connection device for ceramic element**

(30) Priority: 08.05.1998 JP 1285998
(71) Applicant: NGK SPARK PLUG CO., LTD, Mizuho-ku Nagoya-shi Aichi (JP)
(72) Inventor: Yoshikawa, Takaya, Mizuho-ku, Nagoya-shi, Aichi (JP); Yabuta, Katsuhisa, Mizuho-ku, Nagoya-shi, Aichi (JP); Ito, Masaya, Mizuho-ku, Nagoya-shi, Aichi (JP); Nishio, Hisaharu, Mizuho-ku, Nagoya-shi, Aichi (JP)
(74) Representative: Grünecker, Kinkeldey, Stockmair & Schwanhäusser Anwaltssozietät

(57) **Abstract**

To provide a connection device for firmly retaining an assembled boy which includes a ceramic element 2, lead strips 8 disposed at the opposite sides of the ceramic element 2, and two insulation sheets arranged in such a manner as to hold the ceramic element 2 and the lead strips 8 therebetween, thereby preventing formation of cracks in the ceramic element 2 even in a high-temperature atmosphere. A connection device includes an assembled body 10, which, in turn, includes a ceramic element 2 having electrical connection portions 7 and lead strips 8 in contact with the electrical connection portions 7, and a ring member 11 press-fitted onto the assembled body 10 to thereby press the lead strips 8 against the electrical connection portions 7. The thickness t of the ceramic element 2 and the length L of an effective retaining portion of the ring member 11 satisfy the relation "0.23≤L/t≤13."

## Description

### Detailed Description of the Invention

### Field of the Invention

The present invention relates to a connection device for providing a heat-resistant joint between a ceramic element and lead strips.

### Prior Art

Conventionally, an oxygen sensor element used in a vehicle for determination of the oxygen concentration of exhaust gases is known as a ceramic element which is attached to an exhaust pipe and exposed to high temperature. A ceramic element 30 exposed to high temperature and lead strips 8 are electrically connected through fitting of a metallic ring 31 thereto. Japanese Patent Application No. 9-293322 proposes means for obtaining a stably connected assembly of the ceramic element 30 and the lead strips 8 by use of the metallic ring 31 and through selection of an appropriate interference amount and an appropriate minimum wall thickness of the metallic ring 31.

### Problems to be Solved by the Invention

Reduction in the size of a sensor is accompanied by reduction in the distance between an attachment portion of the sensor to an exhaust pipe and a connection portion between the ceramic element 30 and lead strips; consequently, the connection portion assumes a high temperature.

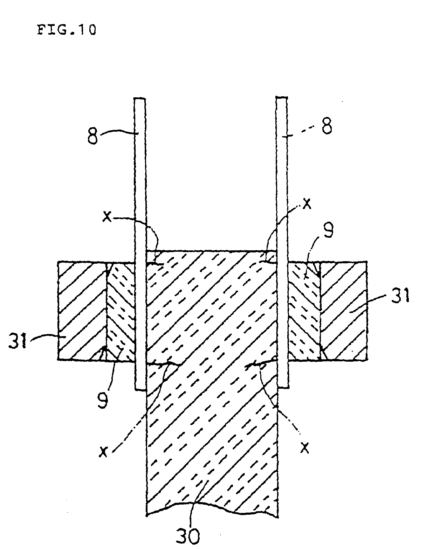

The inventors of the present invention carried out extensive studies and found the following. The ceramic element 30 is strong against a compressive stress but is weak against a tensile stress. During joining of electrodes and the ceramic element 30 through interference fitting, a compressive stress acts on a joint portion of the ceramic element 30, so that no problem occurs. However, when the sensor is used at high temperature, the joint portion undergoes thermal fatigue, so that the difference in thermal expansion among elements of the sensor causes formation of cracks x as shown in FIG. 10 and in the worst case causes a malfunction in the ceramic element 30. When the interference amount is decreased in order to avoid the crack problem, a retaining force for the electrodes (lead strips) decreases with a resultant failure to reliably join the electrodes and the ceramic element 30.

The present invention has been achieved in view of the foregoing, and an object of the invention is to provide a connection device for a ceramic element for strongly joining a ceramic element and lead strips together and for preventing formation of cracks in the ceramic element even in use at high temperature.

### Means to Solve the Problems

A connection device for a ceramic element according to the present invention employs the following technical means.

In a connection device for a ceramic element comprises: an assembled body comprising a ceramic element having an electrical connection portion and lead strips in contact with the electrical connection portion and extending outward; and a ring member having an inner dimension, i.e., a retaining dimension, smaller than an outer dimension, i.e., an engaging dimension, of the assembled body, the ring member being interference-fitted onto the assembled body to thereby mechanically press the lead strips against the electrical connection portion of the ceramic element.

The thickness t of the ceramic element and the axial length L of an effective retaining portion of the ring member satisfy the relation "0.23≤L/t≤13."

The length L of the effective retaining portion of the ring member denotes an effective longitudinal length of a contact surface between the inner surface of the ring member and the outer surface of the ceramic element as measured with exclusion of a chamfered portion formed at an end of the inner surface of the ring member and a chamfered portion formed at an end of the outer surface of the ceramic element.

In the connection device for the ceramic element according to Claim 1, the assembled body further comprises an insulation sheet interposed at least between the outer surfaces of the lead strips and the ring element.

In the connection device for the ceramic element according to Claim 1, an insulation layer is integrally formed on at least a portion of the inner surface of the ring member that faces the outer surfaces of the lead strips.

In the connection device for the ceramic element according to Claim 1, the ring member is made of an insulating material, and neither the insulating sheet nor the insulation layer is employed.

In the connection device for the ceramic element according to any of Claims 1 to 4, the ceramic element is a gas sensor element of ceramic, such as an oxygen sensor element, an NOx sensor element, a CO sensor element, or a CO₂ sensor element.

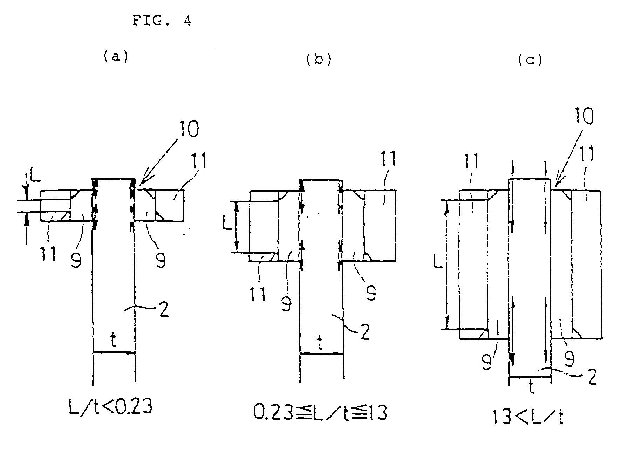

Since the thickness t of the ceramic element and the axial length L of the effective retaining portion of the ring member satisfy the relation "0.23≤L/t≤13," the following effect is yielded. Even though a tensile stress exerted at each axial fitting end is relatively large, the tensile stresses exerted at the axially opposite fitting ends do not interfere with each other, but act independently of each other, since the distance between the axially opposite fitting ends is relatively long (FIG. 4(b)).

Thus, formation of cracks in the ceramic element is effectively prevented, thereby enabling the ceramic element to maintain a sensor function.

When L/t<0.23, the stress exerted at each fitting end becomes small. However, since the axially opposite fitting ends are close to each other, the stresses exerted at the axially opposite fitting ends overlap each other, generating a resultant relatively large composite stress (FIG. 4(a)). As a result, cracks are formed in the sensor element, causing wire breaking at a lead portion that connects a sensing portion and the electrical connection portion. Thus, the sensor element fails to exhibit an expected sensor function.

When 13<L/t, the stresses exerted at the axially opposite fitting ends are independent of each other, but are excessively large to such an extent as to cause formation of cracks in the ceramic element (FIG. 4 (c)).

Preferably, the thickness t of the ceramic element and the axial length L of the effective retaining portion of the ring member satisfy the relation "0.26≤L/t≤12.7." This completely prevents cracking of the ceramic element, so that the ceramic element can maintain a sensor function.

Since the assembled body further comprises an insulation sheet interposed at least between the outer surfaces of the lead strips and the ring element, the lead strips are insulated from the ring member. Also, the insulation sheet can be fixedly interposed therebetween with ease.

Since an insulation layer is integrally formed on at least a portion of the inner surface of the ring member that faces the outer surfaces of the lead strips, the lead strips are insulated from the ring member, and the connection device can be made compact to thereby improve the impact resistance thereof.

Since the ring member is made of an insulating material, the connection device can be made compact as in the case of Claim 3.

Embodiments, first through third experimental examples, and modified examples of the present invention will next be described.

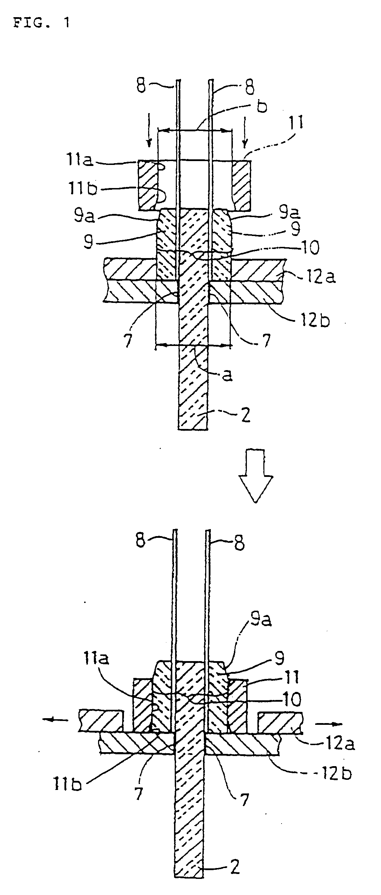

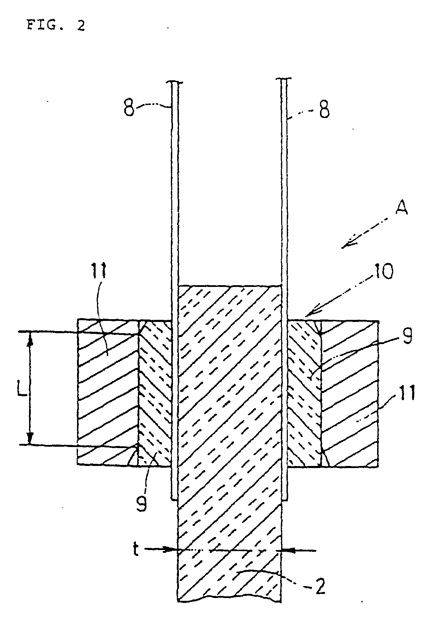

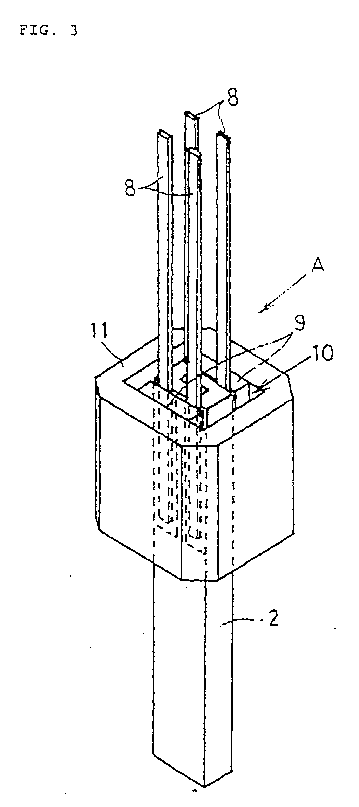

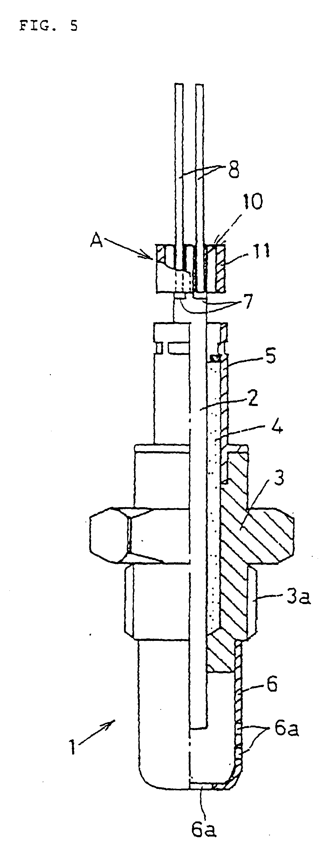

FIGS. 1 to 5 are views for explaining an embodiment of the present invention, wherein FIG. 1 is a view illustrating a procedure for assembling a connection device A for a ceramic element, FIG. 2 is an enlarged sectional view showing related portions of the connection device A of FIG. 1, FIG. 3 is a perspective view of the connection device A of FIG. 1, FIG. 4 is schematic views of connection devices for a ceramic element used in experiments, and FIG. 5 is a sectional view showing related portions of an oxygen sensor using an oxygen sensor element, which is an example of a ceramic element.

As shown in FIG. 5, an oxygen sensor 1 includes a compact ceramic element 2. The ceramic element 2 is an oxygen sensor element for determining an oxygen concentration within an exhaust pipe of a vehicle.

The ceramic element 2 assumes a known compact structure of a slender, rectangular parallelepiped in which an air-fuel ratio sensor portion and an electric heater portion are arranged in layers and sintered together. A tip portion of the ceramic element 2 is exposed to high-temperature exhaust gas flowing through the exhaust pipe.

The ceramic element 2 is fixedly placed within a cylindrical metallic fixture 3 by means of a glass seal 4 (or heat resistant cement) and a metallic retainer 5. The metallic fixture 3 is fixedly attached to the exhaust pipe by means of an attachment screw 3a such that a tip portion of the ceramic element 2 projects from the tip of the metallic fixture 3.

A metallic cover 6 is fixedly attached to a tip portion of the metallic fixture 3 through resistance welding or similar process so as to cover the projected portion of the ceramic element 2. The cover 6 assumes the form of a cap and has openings 6a formed therein for taking in the high-temperature exhaust gas flowing through the exhaust pipe.

Two electrical connection portions 7 are metallized onto one side surface of a root portion of the ceramic element 2 in order to output a signal from the air-fuel ratio sensor portion. Also, two other electrical connection portions 7 are metallized onto the opposite side surface of the root portion of the ceramic element 2 in order to feed electricity to the electrical heater portion.

Since the oxygen sensor 1 is made compact as described above, the entire oxygen sensor 1 assumes a high temperature due to exposure to exhaust heat. Accordingly, the electrical connection portions 7 of the ceramic element 2 and neighboring regions assume a high working temperature.

A lead strip 8 is electrically and mechanically connected to each electrical connection portion 7 of the ceramic element 2. The joint structure resistant to a high temperature will next be described.

As shown in FIGS. 1 to 3, the ceramic element 2 assumes the form of a slender, rectangular parallelepiped and is made of partially stabilized zirconia. The two electrical connection portions 7 are metallized onto each of the opposite side surfaces of the root portion of the ceramic element. The lead strip 8 of Inconel or stainless steel is placed on each of the electrical connection portions 7. The thus-assembled portion is held between two rectangular ceramic insulation sheets 9 of alumina, thus forming an assembled body 10. A metallic ring member 11 of Incoloy or stainless steel assuming a rectangular tubular form is interference-fitted onto the assembled body 10 through press fitting, hot-mode interference fitting, cold-mode interference fitting, or similar process.

As shown in FIG. 1, the ring member 11 has a retaining portion 11a whose inner dimension, i.e., whose retaining dimension b, is smaller than an outer dimension, i.e., an engaging dimension a ((thickness of ceramic element 2)+(total thickness of both lead strips 8)+(total thickness of two insulation sheets 9)), of the assembled body 10. The assembled body 10 is retained within the retaining portion 11a through interference fitting. As shown in FIG. 2, the thickness t of the ceramic element 2 and the axial length L of the effective retaining portion of the ring member 11 are preferably determined so as to meet the relation "0.23≤L/t≤ 13."

In order to impart an appropriate joint strength on the lead strips 8, interference fitting between the assembled body 10 and the ring member 11 desirably has an interference amount (including an interference amount as measured after disassembly of the assembly of the assembled body 10 and the ring member 11) of at least 0.01 mm (10 µm). Even when the interference amount is 10 µm or greater, an accompanying tensile stress is decreased, so that a stable connection device free from cracking in the ceramic element is obtained.

An example of joining the ring member 11 onto the assembled body 10 through press fit will next be described with reference to FIG. 1.
1) The press fit starting end of the retaining portion 11a of the ring member 11 is chamfered to form a chamfered portion 11b. The press fit starting end of the insulation sheet 9 is also chamfered to form a chamfered portion 9a.
2) The assembled body 10 including the ceramic element 2, four lead strips 8, and two insulation sheets 9 is held by a split-type jig 12a. Electrical connection portions 7 of the ceramic element 2 are retained by a jig 12b.
3) Lubricant (emulsion of stearic acid, for example) is applied onto the press fit starting end and press fit surface of the ring member 11. Then, the ring member 11 is press-fitted onto the periphery of the assembled body 10. Before the press fit starting end of the ring member 11 reaches the jig 12a, the jig 12a is opened outward so that the ring member 11 is press-fitted onto the periphery of the assembled body 10.
4) The thus-press-fitted assembly may be heated to a temperature of 350°C so as to decompose the lubricant, thereby increasing a force of retaining the assembled body 10 by the ring member 11.

Thus, the ring member 11 is press-fitted onto the periphery of the assembled body 10.

In the connection device for the ceramic element 2 of the oxygen sensor 1 used in a vehicle, the thickness t of the ceramic element 2 and the axial length L of the effective retaining portion of the ring member 11 are determined so as to meet the relation "0.23≤L/t≤13." As a result, even in a high-temperature atmosphere, tensile stress generated in the ceramic element 2 can be decreased, thereby preventing formation of cracks in a retained portion of the ceramic element 2 and thus enabling the ceramic element 2 to maintain a sensor function.

### Experimental Example 1

Connection devices for a ceramic element according to the above-described embodiment (hereinafter referred to as examples) and connection devices for a ceramic element serving as comparative examples were subjected to 1000 cycles of a heat cycle fatigue test, in which one cycle is composed of exposure to room temperature for 20 minutes and exposure to a temperature of 750°C for 20 minutes, and were evaluated for the degree of damage to the ceramic elements. Incoloy 909 (trade name) is a heat resistant steel which contains Fe, Ni, and Cr. Inconel 750 (trade name) is a heat resistant steel which contains Ni as a main component, Fe, and Cr.

The tested examples and comparative examples assumed the following specifications.

### Examples and Comparative Examples

The ring member 11 is made of Incoloy 909 and has a minimum wall thickness of 0.7 mm and the length L of the effective retaining portion as specified in Table 1.

The ceramic element 2 is made of partially stabilized zirconia and has a width of 4 mm and a thickness of 1.3 mm.

The lead strip 8 is made of Inconel 750 and has a width of 1.5 mm and a thickness of about 0.2 mm.

The insulation sheet 9 assumes the form of a slender, rectangular parallelepiped, is made of alumina, and has a width of 4 mm and such a thickness that an interference amount assumes 0.01 mm. These elements were joined together through press fit as illustrated in FIG. 1. Sortie of thus-obtained connection devices were disassembled to ensure that an effective interference amount is 0.01 mm. Test results are shown in Table 1.

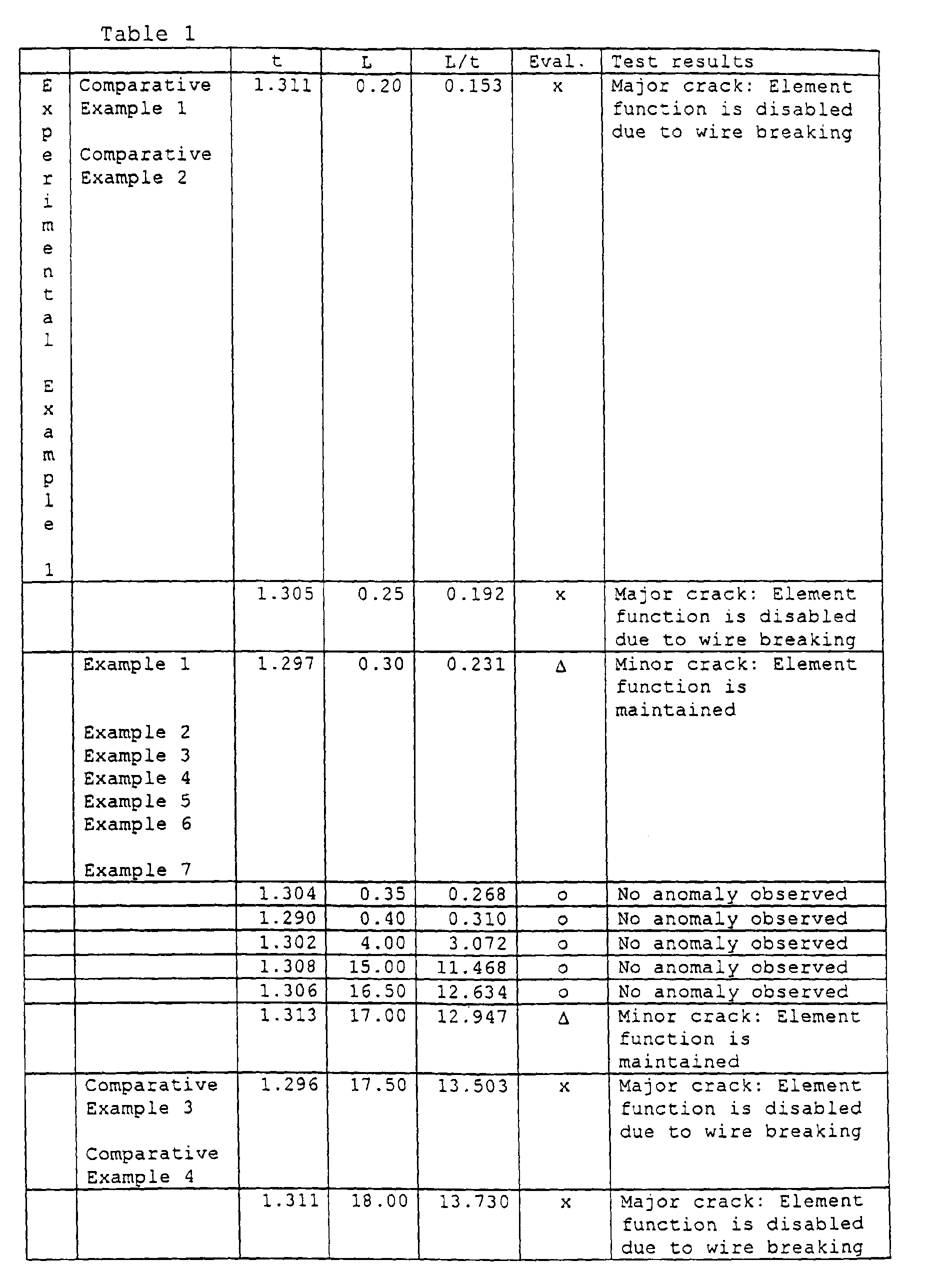

Comparative examples 1 and 2 correspond to FIG. 4(a), i.e., L/t<0.23.

Examples 1 to 7 correspond to FIG. 4(b), i.e., 0.23≤L/t≤ 13.

Comparative examples 3 and 4 correspond to FIG. 4(c), i.e., 13<L/t. As seen from Table 1, when the thickness t of the ceramic element 2 and the length L of the effective retaining portion of the ring member 11 satisfy the relation "0.23≤L/t≤13," cracking of the ceramic element 2 is prevented in the thermal fatigue test. When the more preferable relation "0.26≤L/t≤12.7" is satisfied, even minor cracks are not formed in the ceramic element 2.

### Experimental Example 2

Connection devices tested in Experimental Example 2 assume a structure similar to that assumed by the connection devices tested in Experimental Example 1 except that the ceramic element 2 has a thickness t of 1.7 mm and that the ring member 11 has the thickness L of the effective retaining portion as specified in Table 2. Test results are shown in Table 2.

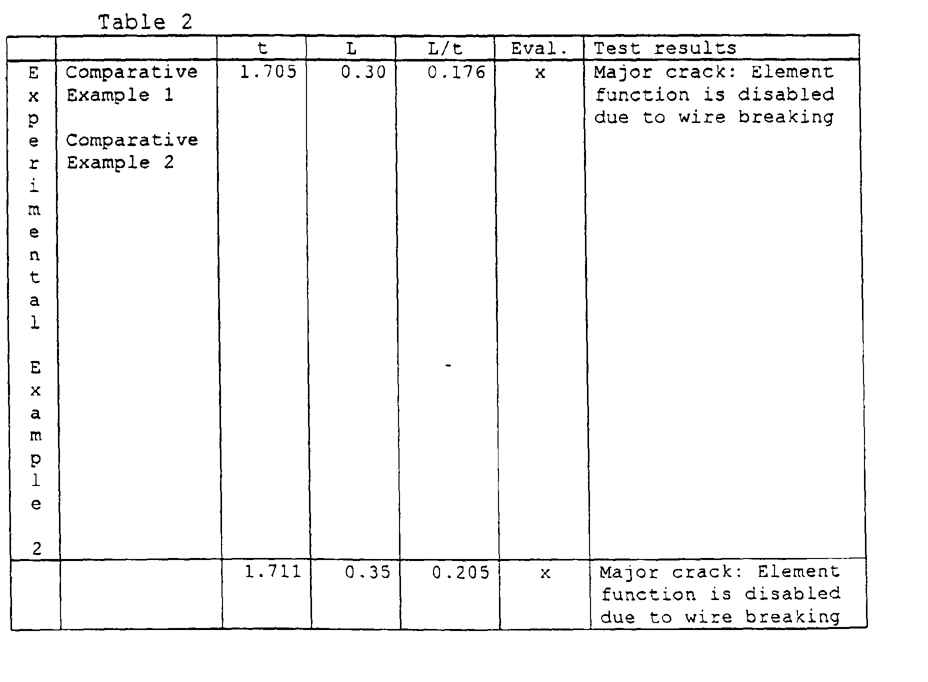

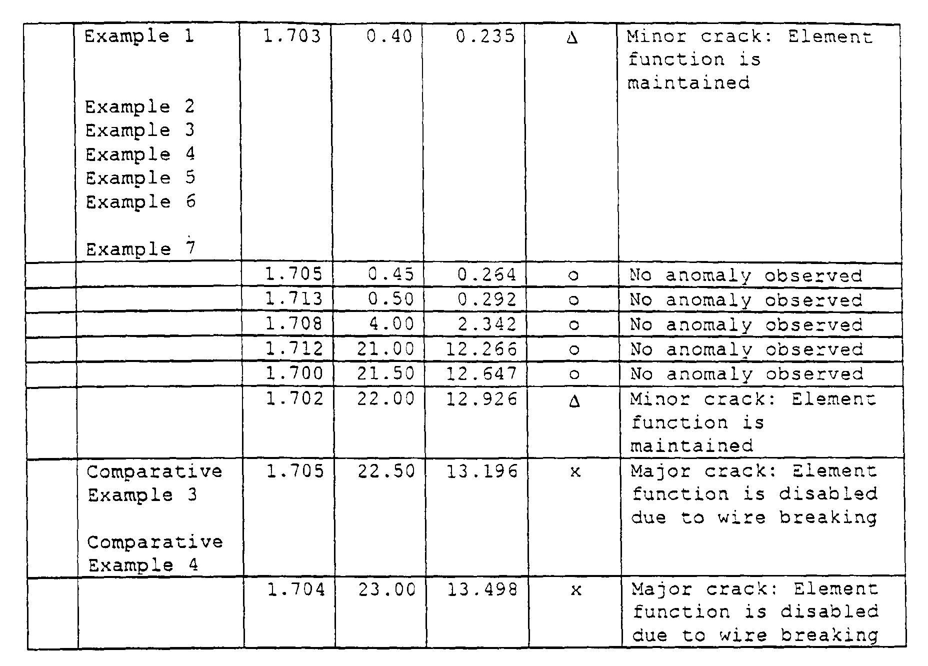

Even when the thickness t of the ceramic element 2 is increased to 1.7 mm, cracking of the ceramic element 2 is effectively prevented so long as the relation "0.23≤L/t≤13" is satisfied.

### Experimental Example 3

Connection devices tested in Experimental Example 3 assume a structure similar to that assumed by the connection devices tested in Experimental Example 1 except that the ceramic element 2 has a thickness t of 2.0 mm and that the ring member 11 has the thickness L of the effective retaining portion as specified in Table 3. Test results are shown in Table 3.

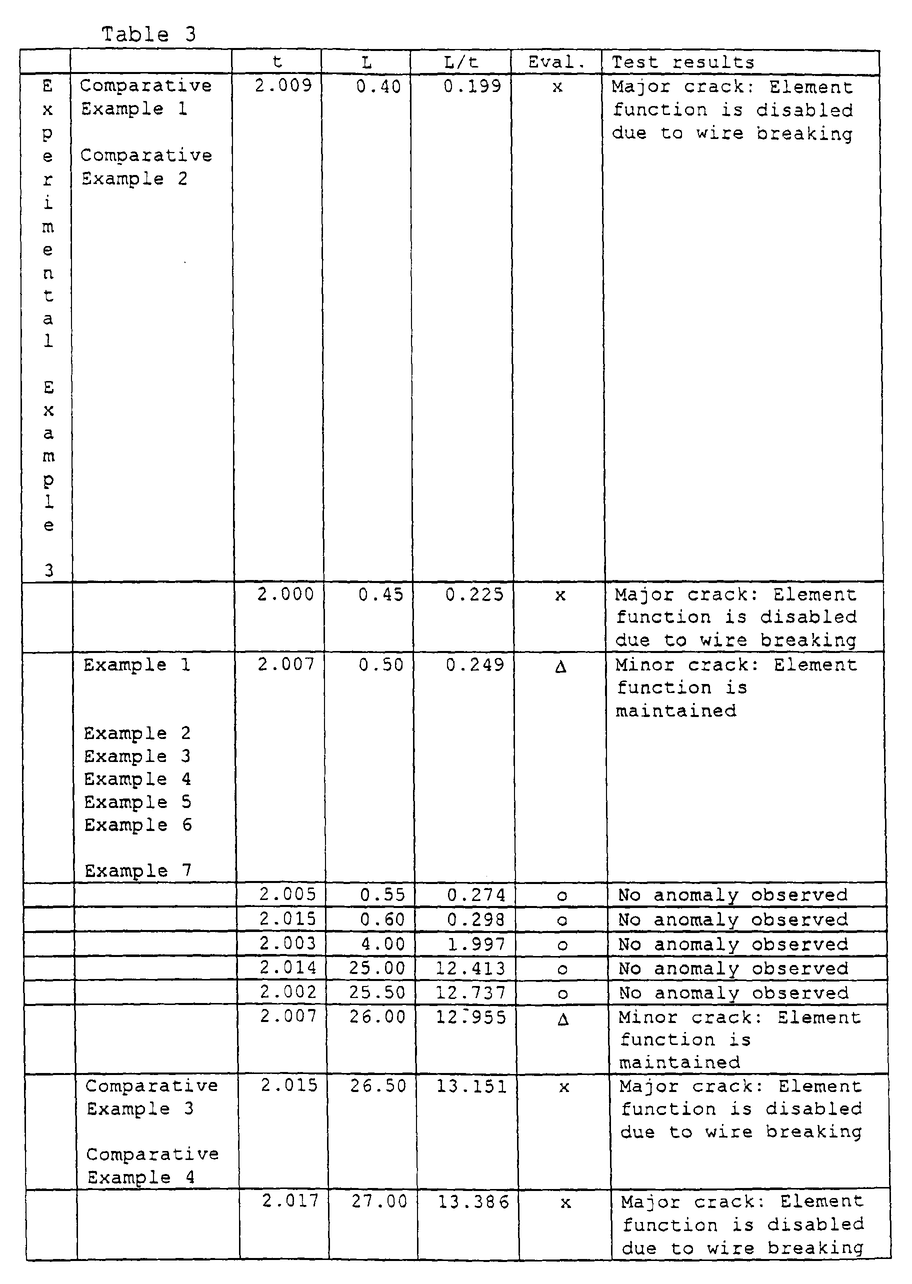

Even when the thickness t of the ceramic element 2 is increased to 2.0 mm, cracking of the ceramic element 2 is effectively prevented so long as the relation "0.23≤L/t≤13" is satisfied.

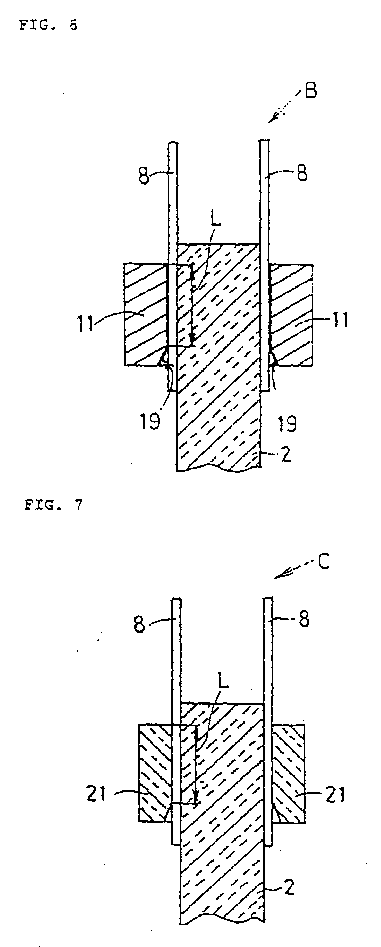

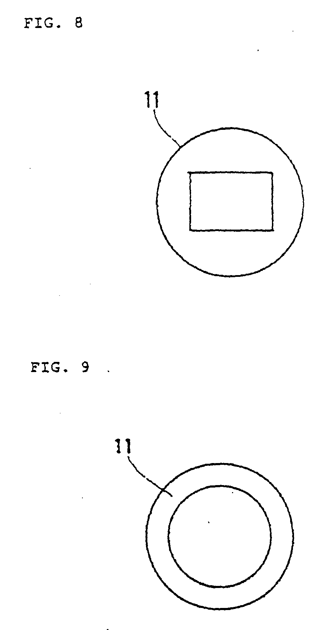

FIGS. 6 and 7 show other embodiments of the present invention.

In a connection device B for the ceramic element 2 shown in FIG. 6, an insulation layer 19 is integrally formed on at least a portion of the inner surface of the ring member 11 that faces the outer surfaces of the lead strips 8. Employment of the insulation layer 19 enables reduction in thickness of the insulation sheet used for insulation of the lead strips 8, thereby making the connection device B compact and thus imparting excellent impact resistance thereto.

In a connection device C for the ceramic element shown in FIG. 7, the ring member 21 is made of an insulating material (for example, resin or ceramic). As a result, the connection device C is also made compact, thus yielding an effect similar to that yielded by the connection device B of FIG. 6.

### Experimental Example 4

Connection devices whose ring members 11 are made of Waspaloy (trade name) were manufactured. Waspaloy is ultra heat resistant alloy which contains nickel as a major component. The ring member 11 has a minimum wall thickness of 0.7 mm and the length L of the effective retaining portion as specified in Table 4. The ceramic element 2 is made of partially stabilized zirconia and has a width of 3 mm and a thickness of 1.8 mm. The lead strip 8 is made of Inconel 750 and has a width of 1 mm and a thickness of about 0.2 mm. The insulation sheet 9 assumes the form of a slender, rectangular parallelepiped, is made of alumina, and has a width of 3 mm and such a thickness that an interference amount assumes 0.01 mm. These elements were joined together through press fit as illustrated in FIG. 1.

The thus-obtained connection devices were subjected to a heat cycle fatigue test under conditions similar to those of Experimental Example 1. Test results are shown in Table 4.

The trial-manufactured connection devices were disassembled to ensure that an effective interference amount is 0.01 mm.

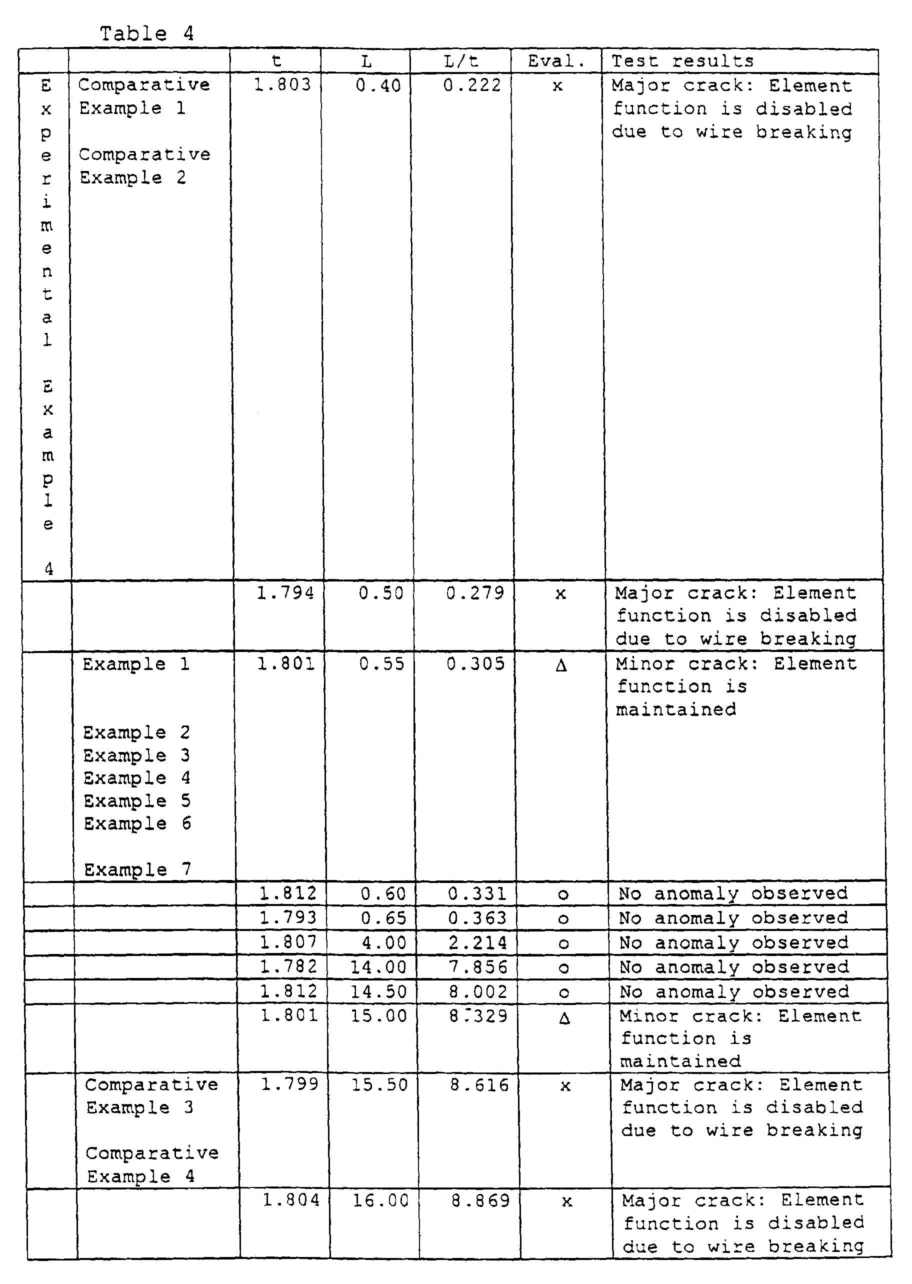

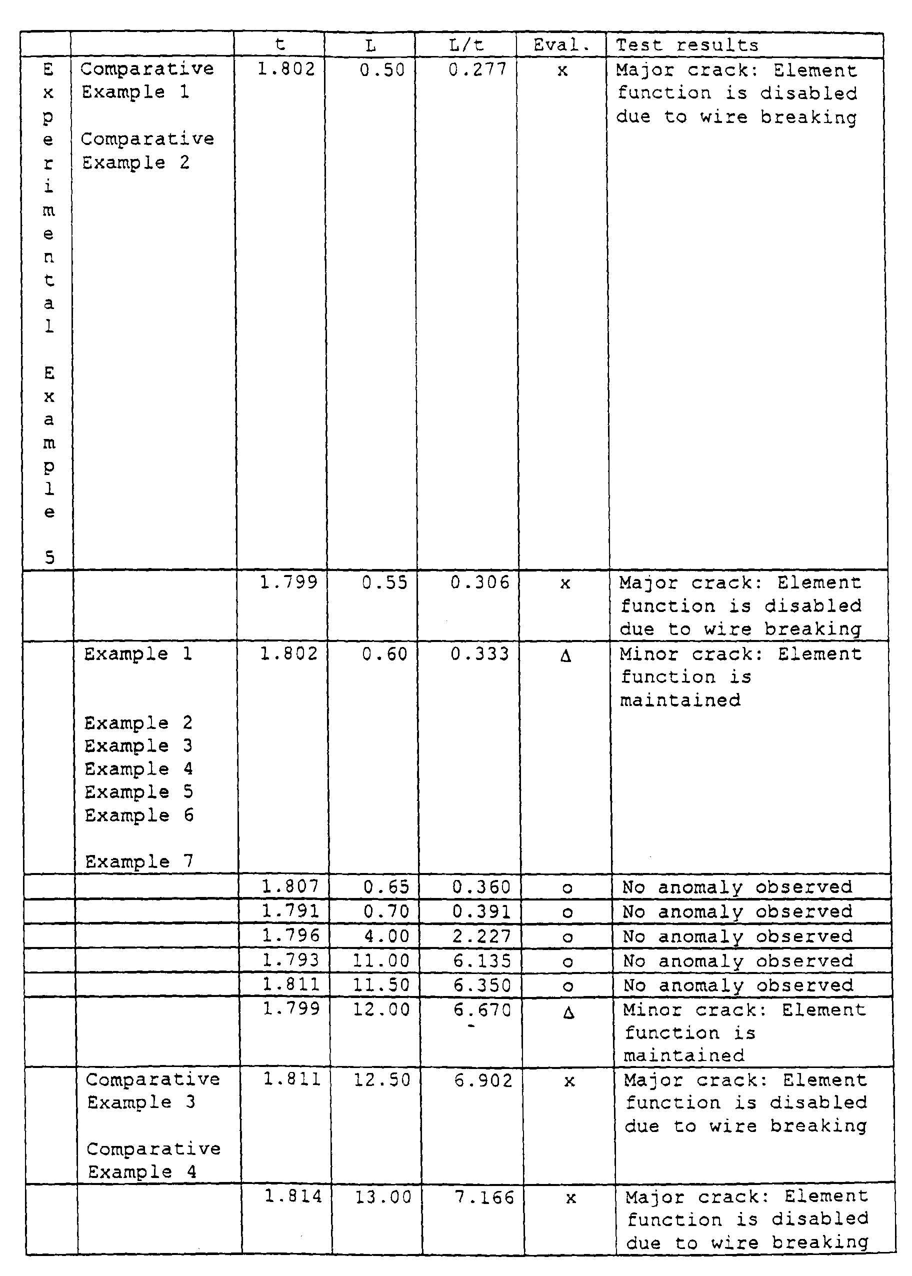

### Modified Examples

The above embodiments are described while mentioning the shape of the ring member 11 as a rectangular tubular form. However, a peripheral shape may be cylindrical as shown in FIG. 8, or both the peripheral shape and a hole shape may be cylindrical. When the ring member 11 has a cylindrical hole formed therein, the periphery of the insulation sheet 9 may be formed into an arcuate shape.

The above embodiments are described while mentioning the ceramic element 2 as an oxygen sensor element used in an oxygen sensor 1. However, the ceramic element 2 may be used as any other gas sensor element of ceramic, such as an NOx sensor element, a CO sensor element, or a CO₂ sensor element.

### Brief Description of the Drawings

FIG. 1
   View illustrating a procedure for assembling a connection device for a ceramic element.
FIG. 2
   Enlarged sectional view showing related portions of the connection device of FIG. 1.
FIG. 3
   Perspective view showing the connection device of FIG. 1.
FIG. 4
   Schematic views showing connection devices for a ceramic element used in experiments, wherein FIG. 4(a) corresponds to L/t<0.23, FIG. 4(b) corresponds to 0.23≤L/t≤ 13, and FIG. 4(c) corresponds to 13<L/t.
FIG. 5
   Sectional view showing related portions of an oxygen sensor.
FIG. 6
   Sectional view showing related portions of a connection device for a ceramic element according to another embodiment of the present invention.
FIG. 7
   Sectional view showing related portions of a connection device for a ceramic element according to a further embodiment of the present invention.
FIG. 8
   Plan view showing a modified example of a ring member.
FIG. 9
   Plan view showing another modified example of a ring member.
FIG. 10
   Sectional view showing related portions of a conventional connection device for a ceramic element, illustrating formation of cracks in the ceramic element.

### Description of Symbols

- 2: ceramic element
- 7: electrical connection portion (electrode connection portion)
- 8: lead strip
- 9: insulation sheet
- 10: assembly body (in the embodiment, the ceramic element + the lead strip + the insulation sheet)
- 11: ring member
- 11a: retaining portion
- 19: insulation layer
- 21: ring member
- L: length of effective retaining portion
- t: thickness of the ceramic element

## Claims

1. A connection device for a ceramic element comprising:
an assembled body comprising a ceramic element having an electrical connection portion and lead strips in contact with the electrical connection portion and extending outward; and
a ring member having an inner dimension, i.e., a retaining dimension, smaller than an outer dimension, i.e., an engaging dimension, of the assembled body, the ring member being interference-fitted onto the assembled body to thereby mechanically press the lead strips against the electrical connection portion of the ceramic element,
wherein the thickness t of the ceramic element and the axial length L of an effective retaining portion of the ring member satisfy the relation "0.23≤L/t≤13."

2. A connection device for a ceramic element according to Claim 1, wherein the assembled body further comprises an insulation sheet interposed at least between the outer surfaces of the lead strips and the ring element.

3. A connection device for a ceramic element according to Claim 1, wherein an insulation layer is integrally formed on at least a portion of the inner surface of the ring member that faces the outer surfaces of the lead strips.

4. A connection device for a ceramic element according to Claim 1, wherein the ring member is made of an insulating material, and no insulating material is provided.

5. A connection device for a ceramic element according to any of Claims 1 to 4, wherein the ceramic element is a gas sensor element of ceramic, such as an oxygen sensor element, an NOx sensor element, a CO sensor element, or a CO₂ sensor element.
